# EUROPÄISCHE PATENTSCHRIFT

(11) **EP 0 379 713 B1**
(45) Veröffentlichungstag und Bekanntmachung des Hinweises auf die Patenterteilung: **06.03.1996**
(21) Anmeldenummer: 89123625.9
(22) Anmeldetag: 21.12.1989
(51) Int. Cl.: H04N 7/087

(54) **Videoempfangseinrichtung**
Video receiving device
Dispositif récepteur vidéo

(30) Priorität: 21.01.1989 DE 3901785; 25.08.1989 DE 3928175
(43) Veröffentlichungstag der Anmeldung: 01.08.1990
(73) Patentinhaber: Nokia (Deutschland) GmbH, D-75175 Pforzheim (DE)
(72) Erfinder: Apitz, Siegfried, D-7530 Pforzheim (DE)

(56) Entgegenhaltungen:
- EP-A- 0 096 381
- EP-A- 0 253 110
- DE-A- 3 527 939
- DE-A- 3 621 263
- DE-A- 3 623 925
- DE-C- 3 742 468
- PATENT ABSTRACTS OF JAPAN, Band 11, Nr. 363 (E-560), 26. November 1987; & JP-A-62 136 183
- IEEE 1988 INTERNATIONAL CONFERENCE ON CONSUMER ELECTRONICS, Digest of Technical Papers, 8.-10. Juni 1988, Rosemont, Illinois, Seiten 288-289, IEEE, New York, US; G. ZEISEL et al.: "An interactive menu-driven remote control unit for TV-receivers and VCR-recorders"
- ELEKTRONIK, Band 34, Nr. 12, 14. Juni 1985, Seiten 163-168, München, DE; U. WILDHAGEN: "Teletext-Multi-Page-System mit TPU 2700"
- RUNDFUNKTECHNISCHE MITTEILUNGEN, Band 31, Nr. 2, März-April 1987, Seiten 83-93, Norderstedt, DE; G. EITZ et al.: "Top - ein Verfahren zur vereinfachten Anwahl von Fernsehtext-Tafeln durch den Zuschauer"
- IEEE TRANSACTIONS ON CONSUMER ELECTRONICS, "1988 International Conference on Consumer Electronics, part 1", Band 34, Nr. 3, August 1988, Seiten 788-792, New York, NY, US; U. BENSCH: "VPV-videotext programs videorecorder"
- RUNDFUNKTECHNISCHE MITTEILUNGEN (RTM), Band 30, Nr. 5, September-Oktober 1986, Seiten 223-229, Norderstedt, DE; G. EITZ et al.: "Videotext Programmiert Videoheimgeräte (VPV)"

## Beschreibung

Die Erfindung betrifft eine Videoempfangseinrichtung, also speziell eine Fernsehgeräteinrichtung oder eine Videorecordereinrichtung. Derartige Einrichtungen können Fernsehsignale in mehreren Programmen empfangen. Unterschiedliche Programme werden in der Regel in unterschiedlichen Kanälen (unterschiedlichen Frequenzbändern) gesendet. Jedes Programm sendet in der Regel täglich eine Vielzahl von Sendungen.

Die Fernsehsignale enthalten nicht nur Bildsignale für Sendungen, sondern auch häufig Textsignale für einen Informationsdienst, der als Teletext oder Videotext bezeichnet wird. Die gesendeten Textseiten können Information zu Sendungen enthalten. Derartige Seiten werden im folgenden als Sendungsseiten bezeichnet. Andere Seiten werden als Informationsseiten bezeichnet; hierzu zählen z. B. Seiten, die über das Wetter, über Effektenkurse, über Sonderangebote zu bestimmten Artikeln oder dergleichen unterrichten. Unter "Seite" wird im folgenden grundsätzlich diejenige Textinformationsmenge verstanden, die jeweils auf einer Bildschirmseite dargestellt wird. In der Praxis werden zum Teil Bildschirmtafeln gesendet, die sich über mehrere Seiten erstrecken. Jede Seite trägt dieselbe Seitennummer. Wird eine derartige Seitennummer mehrfach aufgerufen, werden die verschiedenen Seiten der mehrseitigen Tafel nacheinander dargestellt.

Unterschiedliche Programme benutzen häufig jeweils gleiche Seitennummern, wobei jedoch für Seiten gleicher Numerierung nicht notwendigerweise jeweils dieselbe Thematik gilt. Es kann also z. B. eine Seite mit der Nummer 300 in einem Programm eine Übersicht über die Sendungen eines Tages geben, während ein anderes Programm unter derselben Seitennummer Information zum Wetter sendet. Demgemäß ist es erforderlich, dann, wenn eine bestimmte Information gewünscht ist, nicht nur eine Seitennummer festzulegen, sondern auch das Programm, von dem die gewünschte Seite empfangen werden soll.

### STAND DER TECHNIK

Soll eine bestimmte Textseite von einer Videoempfangseinrichtung auf einen Bildschirm ausgegeben werden, ist gemäß dem Stand der Technik zunächst ein Programmplatz anzuwählen, und zwar derjenige, der für dasjenige Programm gilt, aus dem die darzustellende Seite empfangen werden soll. Für die weitere Vorgehensweise existieren zwei Varianten. Die eine besteht darin, daß die gewünschte Seite für jedes Darstellen von Hand eingegeben wird. Die andere Variante besteht darin, daß sich die Videoempfangseinrichtung mehrere Seitennummern merkt, die ein Benutzer auf einem Programmplatz eingibt. Wird dann derselbe Programmplatz später wieder eingestellt, erscheinen zuvor gewünschte Seitennummern in einer Fußzeile. Der Benutzer kann dann eine der eingegebenen Nummern auswählen. Eine Videoempfangseinrichtung der letztgenannten Art ist in "Funkschau" 6/1985, S. 53 - 56, beschrieben. Dieses Gerät speichert nicht nur Seitennummern, sondern es speichert auch den Inhalt mehrerer Textseiten. Sobald ein Programmplatz angewählt ist, wird der Tuner der Einrichtung von der Steuereinrichtung derselben auf die diesem Programm zugeordnete Frequenz eingestellt. Einem Textdecoder wird Information über die gewünschten Seitennummern zugeführt. Dieser trennt die gewünschten Seiten aus dem empfangenen Fernsehsignal ab und überführt sie in den Seitenspeicher. Dies hat den Vorteil, daß dann, während die erste empfangene Seite betrachtet wird, bereits weitere Seiten gesucht werden, so daß eine folgende Seite nach dem Umschalten auf eine Folgeseite in der Regel sofort zur Verfügung steht. Nur dann, wenn auf ein neues Programm umgeschaltet wird, muß gewartet werden,

bis wieder eine erste Seite mit vorgegebener Nummer aus dem Fernsehsignal ausgesondert wurde.

Es ist weiterhin bekannt, Wünsche für aufzuzeichnende Sendungen direkt aus einer Sendungsseite zu übernehmen, wie sie auf einem Bildschirm dargestellt wird. Hierzu wird die Zeile mit der gewünschten Sendung mit Hilfe eines Kursors angefahren, und dann wird durch Betätigen einer vorgegebenen Taste die Information der Zeile in einen Sendungsspeicher übertragen. Die Information beinhaltet das Datum und die Anfangszeit der Sendung.

Im weiteren Betrieb der Einrichtung überwacht ein Timer, ob der Sendungsbeginn erreicht ist. Sobald dies der Fall ist, wird die Einrichtung, in diesem Fall ein Videorecorder, in den Aufzeichnungsmode überführt. Der Sendungsbeginn ist dabei derjenige Zeitpunkt, ab dem ein VPS (Video Programming System)-Signal gesendet wird, das der vorbestimmten Startzeit der Sendung entspricht. Die Aufnahme wird beendet, sobald das entsprechende VPS-Signal nicht mehr gesendet wird. Das Gerät geht dann wieder in einen Stand-by-Mode über.

Aus der Druckschrift DE-A-3 527 939 ist ein Verfahren zum Übertragen von Videotextsignalen und Programmbeitragskennungssignalen in einem Fernsehsignal bekannt, bei dem empfängerseitig die von verschiedenen empfangbaren Programmen zugeordneten Videotext-Ubersichtsseiten dekodiert und mit der darin enthaltenen Information über den Titel des momentan gesendeten Programmbeitrags und wahlweise einem oder mehreren Programmbeiträgen zu einer Gesamtinformation über die momentan empfangbaren Programmbeiträge zusammengefügt werden. Dazu sind in einem Speicher Kanal nummern und Seitennummern von Videotextseiten gespeichert, um mit einer Ablaufsteuerung das HF-Empfangsteil und den Videotextdecoder zyklisch so anzusteuern, daß von verschiedenen Fernsehprogrammen durch den Speicherinhalt vorgegebene Textseiten zyklisch ausgelesen, decodiert und in einem Pufferspeicher gesammelt werden. Auf diese Weise sind Textdaten von verschiedenen Fernsehprogrammen unabhängig von eingestellten Fernsehprogrammen auf dem Bildschirm jederzeit als Gesamtübersichtsinformation darstellbar.

In der Druckschrift DE-A-3 527 939 sind jedoch keinerlei Hinweise auf Hilfsmittel aufgezeigt, mit denen ein Anwender eine Vielzahl von im Pufferspeicher abgelegten Videotextseiten sinnvoll organisiert zum Darstellen auf einen Bildschirm aufrufen und/oder bearbeiten kann.

Im Zusammenhang mit den oben beschriebenen Funktionen von Videoempfangseinrichtungen bestehen zahlreiche Bedienungsprobleme, weswegen dauernd Anstrengungen unternommen werden, die Bedienungsfreundlichkeit derartiger Videoempfangseinrichtungen weiter zu steigern.

### DARSTELLUNG DER ERFINDUNG

Davon ausgehend ist es Aufgabe der Erfindung, Mittel aufzuzeigen, mit denen das Auswählen und das bildliche Darstellen von vollständigen Videotextseiten verschiedener Programme nach thematischen oder zeitlichen Gesichtspunkten durch das Steuerteil der Videoempfangseinrichtung unterstützt wird.

Darüber hinaus sollen gleichzeitig von den gespeicherten Textseiten Teile von Textdaten ausgewählt und zu neuen Ubersichten zusammengestellt werden, die nach verschiedenen Kriterien ebenfalls bildlich darstellbar sind.

Zur Lösung dieser Aufgabe geht die Erfindung von einer an sich bekannten Videoempfangseinrichtung aus, welche Textseiten selbständig aktualisiert, z. B. dadurch, daß in fest vorgegebenen Zeitabständen oder zu fest vorgegebenen Zeitpunkten jeweils ein Aktualisierungsprogrammlauf gestartet wird. Die Bezeichnungen der zu aktualisierenden Seiten, also eine jeweilige Programmbezeichnung und eine jeweilige Seitennummer, wurden zuvor in einer Speichereinrichtung abgelegt. Das Aktualisierungsprogramm arbeitet eine Seitenbezeichnung nach der anderen ab, steuert den Tuner der Einrichtung entsprechend der Programmbezeichnung und den Textdecoder entsprechend der Seitennummer an und schreibt die jeweils aus dem empfangenen Fernsehsignal ausgelesene Textseite in einen Seitenspeicher. Das Abarbeiten Zeile für Zeile erfolgt vorzugsweise so, daß zwar mehrere Zeilen nacheinander ausgelesen werden, aber der Textdecoder gleichzeitig mit mehreren Seitennummern zu einem jeweiligen Programm aktiviert wird. Der Vorteil dabei liegt darin, daß ziemlich aktuelle Videotextinformation zu jeder Tageszeit zugänglich ist, also auch dann, wenn keine Fernsehsignale oder zumindest keine Fernsehsignale mit Textinformation gesendet werden. Weiterhin besteht der Vorteil, daß Textinformation auch dann abgerufen werden kann, wenn das Gerät in einem Modus betrieben wird, bei dem der Tuner auf eine feste Frequenz eingestellt ist. So kann eine Sendung auf dem Bildschirm einer Fernseheinrichtung betrachtet werden, wobei in einem Teilbereich des Bildschirms zugleich Videotext abrufbar ist, und zwar zu Programmen, die auf einer Frequenz gesendet werden, auf der der Tuner während dieser Betrachtung nicht steht. Handelt es sich um ein Videorecordergerät, kann eine Sendung aufgezeichnet werden und auf einem Bildschirm wird gleichzeitig Videotext betrachtet. Der Benutzer kann aus dargestellter Sendungsseiteninformation Sendedaten in seinen Sendungsspeicher übernehmen.

Dieses gestattet es, für einen jeweiligen Programmplatz Textseiten zur Anzeige zu bringen, die gar nicht von demjenigen Programm gesendet werden, das dem jeweiligen Programmplatz zugeordnet ist. Dies wird dadurch ermöglicht, daß zu einem Programmplatz nicht nur eine Seitennummer gespeichert wird oder mehrere Seitennummern gespeichert werden, sondern daß zu jeder Seitennummer zugleich die Programmbezeichnung für dasjenige Programm gespeichert wird, von dem die gewünschte Seite gesendet wird. Diese Erfindung ist z. B. in den folgenden Fällen von Vorteil. Verschiedene Programme senden keine Textdaten, also auch keine Sendungsseiten zu ihrem Programm; jedoch senden andere Programme Sendungsseiten zu einem solchen Programm.

Die Aufgabe der Erfindung wird durch die Merkmale des Anspruchs 1 gelöst.

Mit einem Gerät nach dem Oberbegriff der Erfindung ist es dagegen möglich, für jeden Programmplatz alle Sendungsseiten darzustellen, die das zugehörige Programm betreffen, auch dann, wenn die Sendungsseiten von anderen Programm gesendet werden. Dies ist, wie erwähnt, dadurch möglich, daß zu einem jeweiligen Programmplatz nicht nur Seitennummern, sondern Seitennummern mit Programmbezeichnungen gespeichert werden. Ein weiterer Vorteil besteht darin, daß Programmplätzen Themen zugeordnet werden können. So können z. B. auf einen Programmplatz Textseiten gelegt werden, die jeweils einem bestimmten Thema zugeordnet sind, z. B. dem Wetter oder Börsennachrichten. Als Seiteninformation werden diesem Programmplatz alle diejenigen Programmbezeichnungen mit Seitennummern zugeordnet, die das jeweilige Thema betreffen. Statt durch Anwählen eines Programmplatzes kann eine derartige Themenliste auch durch Anwählen eines besonderen Menüpunktes erstellt und gelesen werden.

Von Vorteil ist die Benutzung einer Programmbezeichnungs-Seitenbezeichnungs-Tabelle, die zugeordnet zu jeweils einer von mehreren Programmbezeichnungen mindestens eine Seitenbezeichnung speichert, wobei sich jede Seitenbezeichnung aus einer Programmbezeichnung und einer Seitennummer zusammensetzt. Diese Tabelle kann z. B. dann eingesetzt werden, wenn festzulegen ist, welche Seiten in die Tabelle für die laufende Aktualisierung oder in einen Programmplatz aufgenommen werden sollen. Es wird dann die Tabelle auf einem Bildschirm zur Anzeige gebracht und mit Hilfe eines Kursors werden aus der Tabelle die gewünschten Seiten ausgewählt. Eine deartige Tabelle kann Hunderte von Seiten auflisten. Die zur Eingabe möglichen Seiten müssen dann nicht mühsam aus Text-Übersichtstafeln herausgesucht und von Hand eingegeben werden. Eine deartige Tabelle ist auch dann hilfreich, wenn bei Programmabläufen Zuordnungen zwischen Seitenbezeichnungen und Programmplätzen zu treffen sind. Wie oben erläutert, kann eine in einem bestimmten Programm mit einer bestimmten Seitennummer gesendete Information ausschließlich Sendungsinformation zu einem anderen Programm enthalten. Die genannte Tabelle läßt direkt nachschlagen, zu welchem Programm welche Seite gehört. Wenn die Tabelle um Uhrzeiten ergänzt ist, die anzeigen, welche Tageszeitspannen bestimmte Seiten abdecken, ist es auch möglich, nachträglich die Bezeichnung von Sendungen, insbesondere deren Titel zu ermitteln, wenn eine solche Sendung aufgezeichnet wurde, ohne daß ihre Bezeichnung zuvor in einen Sendungsspeicher eingegeben wurde.

Die Erfindung betrifft eine besondere Art der Seitensteuerung mit Hilfe eines Kursors. Ein Kursor kann innerhalb einer Seite üblicherweise von Zeile zu Zeile verstellt werden. Soll auf eine folgende Seite oder eine vorige Seite oder ein folgendes Programm oder ein vorheriges Programm umgeschaltet werden, müssen besondere Befehle eingegeben werden. Die erfindungsgemäße Videoempfangseinrichtung sorgt nun dafür, daß jede Textseite an allen vier Seiten von einem Rand umgeben ist. Wird der Kursor bis in den unteren Rand verfahren und wird dann diejenige Taste betätigt, die auch zum Weiterschalten von Zeile zu Zeile betätigt wird, wird auf die folgende Seite zum selben Programm umgeschaltet. Entsprechend wird bei Erreichen des oberen Randes auf die vorige Seite umgeschaltet, bei Erreichen des rechten Randes auf das nächste Programm und bei Erreichen des linken Randes auf das vorige Programm. Die Zuordnung der Ränder zu wechseln, kann auch anders gewählt sein.

In einer besonderen Fortbildung der Erfindung ist Seitensteuerung so ausgestaltet, daß beim Umschalten von einem Programm auf ein anderes während der Textseitendarstellung eine in besonderer Weise festgelegte Seite als erste zur Darstellung bringt. Bei herkömmlichen Einrichtungen wurde immer die erste für das jeweilige Programm festgelegte Seite als erste Seite angezeigt. Die erfindungsgemäße Videoempfangseinrichtung zeigt dagegen diejenige Seite als erste, die zeitlich zu derjenigen Zeit gehört, auf die der Kursor in der vorigen Seite zeigte. Betrachtet also ein Benutzer in einem ersten Programm z. B. eine Seite für das Abendprogramm und schaltet dann die Anzeige von Sendungsseiten auf ein nächstes Programm weiter, wird als erste Seite ebenfalls die Seite für das Abendprogramm dargestellt. So kann ein Benutzer innerhalb einem gewünschten Zeithorizont alle Programme durchblättern. Trifft er auf ein Programm, das keine Seite mit dem gewünschten Zeitbereich enthält, wird diejenige Seite als erste gezeigt, die den folgenden Zeitbereich umfaßt. Fehlt es auch an einer solchen Seite, wird die erste Seite der Liste zum entsprechenden Programm dargestellt. Diese letzteren Varianten ändern aber nichts am eingestellten Zeithorizont. Dieser wird nur dann verändert, wenn innerhalb einer Seite der Kursor von einer Zeile zur nächsten bewegt wird. Mit jedem Erreichen einer neuen Zeile wird die für die Sendung in dieser Zeile geltende Uhrzeit als neue Uhrzeit festgelegt, die den Bezug für das Suchen von Seiten in anderen Programmen gilt. Diese Erfindung läßt sich dann besonders vorteilhaft nutzen, wenn ein dauernd aktualisierter Seitenspeicher zur Verfügung steht. In diesem Fall kann ohne jegliche Wartezeit in den Seiten zu einem einzigen Programm oder zu mehreren Programmen geblättert werden.

### KURZE BESCHREIBUNG DER FIGUREN

- Fig. 1: Blockschaltbild einer Videoempfangseinrichtung, die mit einem Bildschirm und /oder einer Bandeinrichtung zusammenarbeitet;
- Fig. 2: Überblick-Flußplan für eine Videoempfangseinrichtung gem. Fig. 1, im Fall von deren Ausgestaltung als Videorecorder;
- Fig. 3: Flußplan zum Unterprogramm "Grundprogrammierung" im Flußplan von Fig. 2;
- Fig. 4: Darstellung des Inhalts eines Programmplatzspeichers, der zugeordnet zu Programmplätzen Seitennummern speichert;
- Fig. 5: Darstellung des Inhalts eines Programmplatzspeichers, der zugeordnet zu Programmplätzen Seitenbezeichnungen (Seitennummern mit Programmbezeichnungen) speichert;
- Fig. 6: Darstellung des Inhalts einer gesonderten Programmbezeichnungs-Seitenbezeichnungs-Speichereinrichtung
- Fig.: 7 Darstellung des Inhalts einer Sonderliste oder einer Seitenbezeichnungsliste;
- Fig. 8: Darstellung des Inhalts einer ProgrammbezeichnungsSeitenbezeichnungs-Tabelle;
- Fig. 9: Variante der Schritte 3.10 und 3.11 von Fig. 3;
- Fig. 10: Variante des Schrittes 3.10" von Fig. 9;
- Fig. 11: Flußplan eines Aktualisierungsprogramms für Textseiten;
- Fig. 12: Flußplan betreffend das Wechseln von Seiten beim Ablauf gemäß Fig. 12;
- Fig. 13: Flußplan betreffend das Festlegen von Seitennummern beim Blättern durch Textseiten gemäß dem Ablauf von Fig. 14;

### WEGE ZUM AUSFÜHREN DER ERFINDUNG

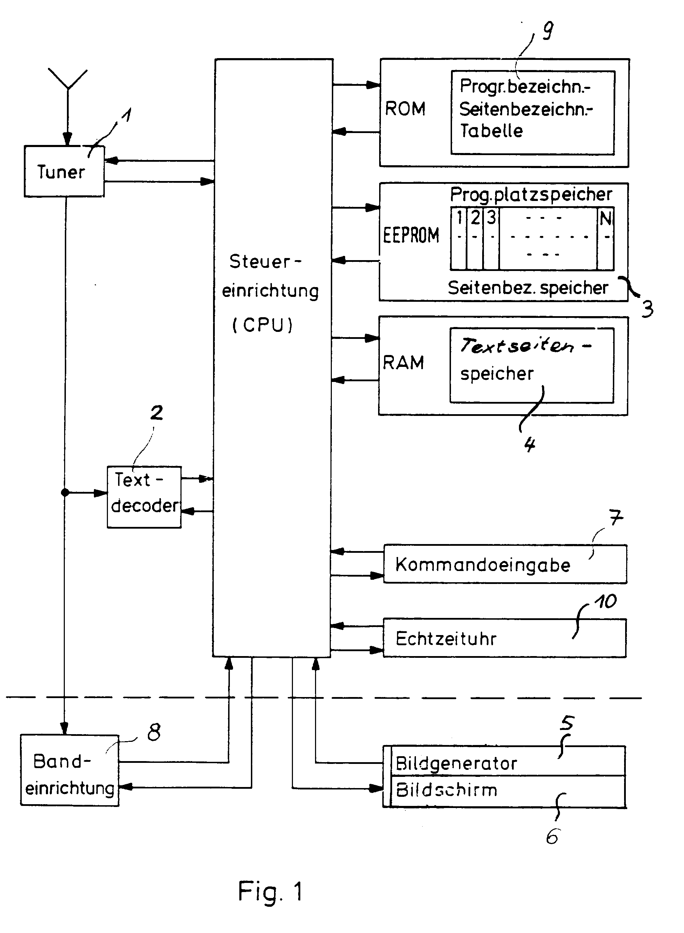

Das Blockschaltbild gemäß Fig. 1 ist durch eine waagerechte gestrichelte Linie unterteilt. Die Blöcke oberhalb der gestrichelten Linie bilden eine Videoempfangseinrichtung, zu der allerdings der mit "Kommandoeingabe" gekennzeichnete Block nicht notwendigerweise gehört. Die Kommandoeingabe kann durch eine Tastatur der Videoempfangseinrichtung gebildet sein, in welchem Fall sie zur Einrichtung gehört, oder sie kann als Fernbedienungsgeber, also als gesonderte Einrichtung ausgebildet sein. Unterhalb der gestrichelten Linie sind ein Block für eine Bandeinrichtung und ein Block für ein Bildgenerator/Bildschirm dargestellt. Eine Videoempfangseinrichtung, die zusammen mit einer Bandeinrichtung in einem Gehäuse untergebracht ist, bildet einen Videorecorder. Eine Videoempfangseinrichtung, die zusammen mit einem Bildschirm in einem Gehäuse untergebracht ist, bildet ein Fernsehgerät.

Die Videoempfangseinrichtung gemäß Fig. 1 verfügt über einen Tuner, einen Textdecoder, einen ROM einen EEPROM, einen RAM, eine Echtzeituhr und eine Steuereinrichtung (CPU), die den Funktionsablauf all dieser Funktionsgruppen durch das Austauschen von Steuer-, Adreß- und Datensignalen steuert.

In den drei Speicherblöcken gemäß Fig. 1 sind Speicherbereiche besonders hervorgehoben, und zwar eine Programmbezeichnungs-Seitenbezeichnungs-Tabelle im ROM, ein Programmblattspeicher und ein Seitenbezeichnungsspeicher im EEPROM und ein Seitenspeicher im RAM. Mit Ausnahme des Programmblattspeichers haben diese Speicherbereiche mit dem Speichern von Textseiten zu tun.

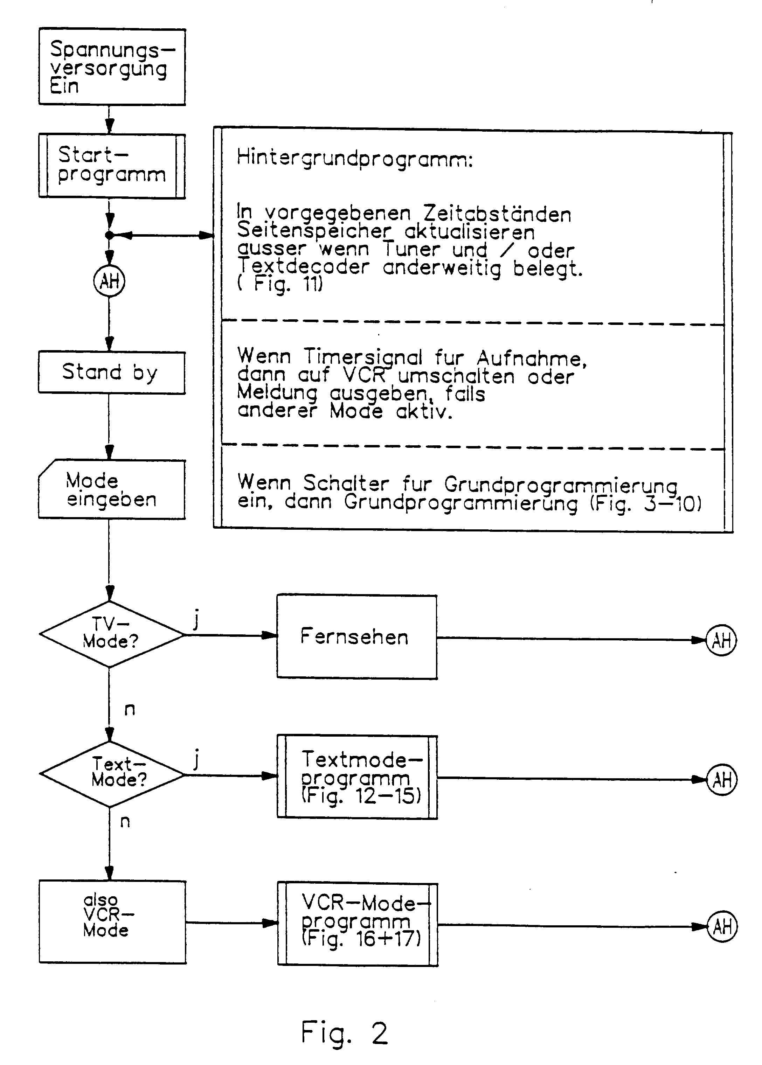

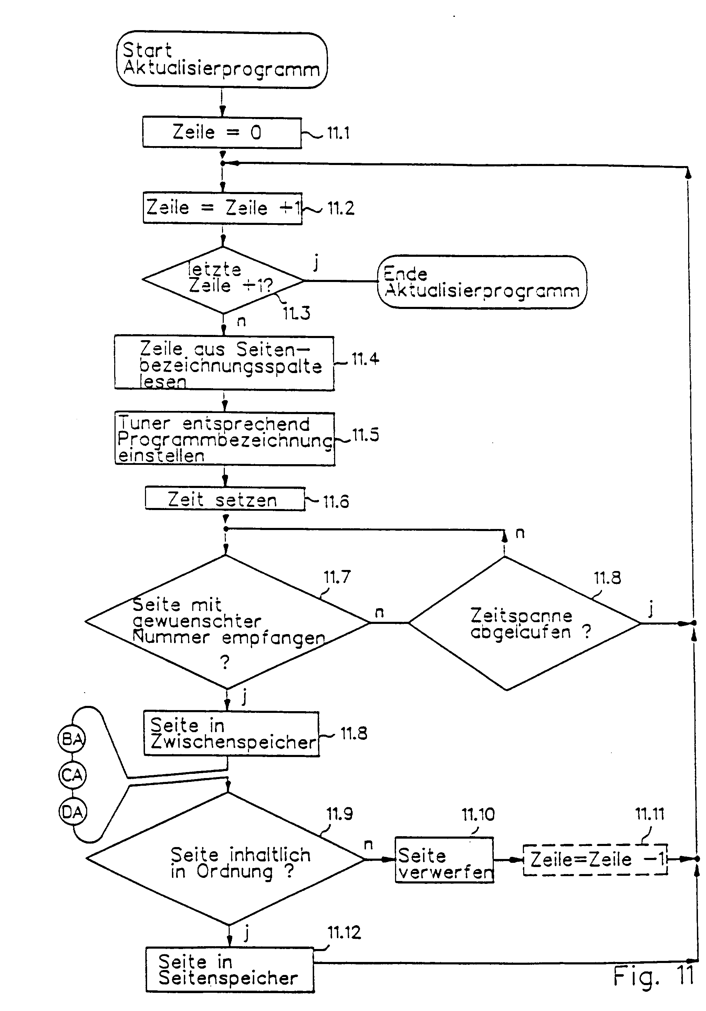

Fig. 2 zeigt den Ablauf des Hauptprogramms für einen Videorecorder. Sobald Spannung am Gerät liegt, sei es durch Anstecken des Netzsteckers ans Netz oder durch Zuschalten einer Versorgungsbatterie, läuft ein Startprogramm ab. Sobald dieses beendet ist,wird mit dem Abarbeiten eines Aktualisierungsprogramms begonnen, das dafür sorgt, daß Textseiten, wie sie über den Textdecoder empfangen werden, dauernd aktualisiert werden. Wie dies konkret erfolgt, wird weiter unten anhand von Fig. 11 erläutert. Das Aktualisierungsprogramm läuft dauernd im Hintergrund, außer dann, wenn der Tuner und/oder der Textdecoder anderweitig belegt sind. Ist für die Aktualisierung ein gesonderter Tuner vorhanden, kann auch dann aktualisiert werden, wenn mit Hilfe des Haupttuners ein Fernsehprogramm zum Ansehen oder zum Aufzeichnen empfangen wird.

Ein Flußdiagramm für ein Fernsehgerät ist dem für einen Videorecorder geltenden Flußdiagramm gemäß Fig. 2 sehr ähnlich. Es fehlt dann nämlich lediglich der VCR-Mode.

Eine Grundprogrammierung ist für jede Videoempfangseinrichtung erforderlich, unabhängig davon, ob sie mit einer baulich vereinigten Bandeinrichtung als Videorecorder oder mit einem baulich vereinigten Bildschirm als Fernsehgerät ausgebildet ist. Mit Hilfe eines abstimmbaren Tuners sind eine Vielzahl von fest vorgegebenen Programmen zu empfangen. Welche Programme mit einer jeweiligen Einrichtung empfangen werden können, ohne daß ein Handabstimmen des Tuners erforderlich ist, wird in der Grundprogrammierung festgelegt. Dort wird in einem Programmplatzspeicher eingeschrieben, welche Empfangsfrequenz für welches Programm gilt.

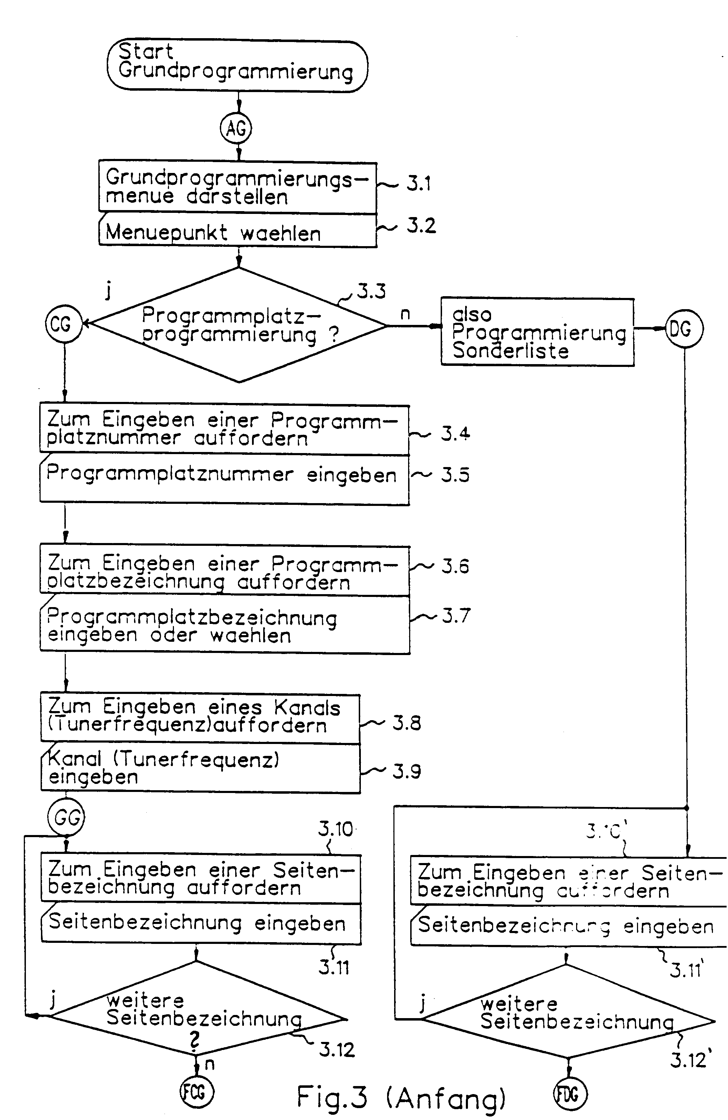

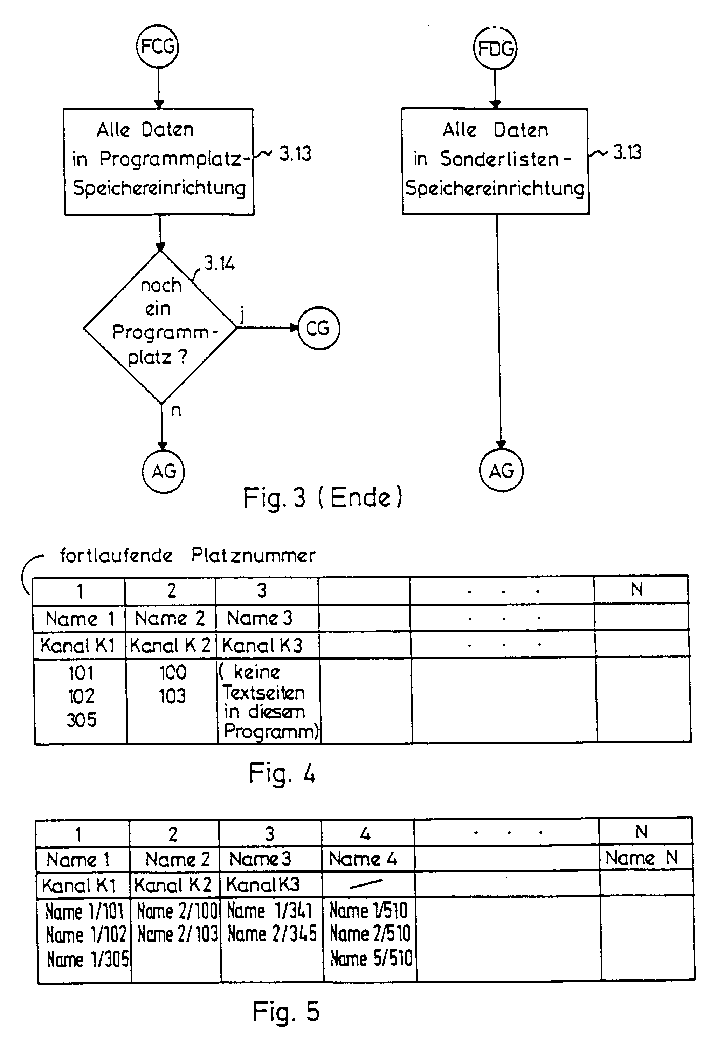

Das Grundprogrammierungsprogramm gemäß Fig. 3 startet immer dann, wenn ein Grundprogrammierungsschalter eingeschaltet ist. Es endet an beliebiger Stelle des Ablaufs, sobald der genannte Schalter ausgeschaltet wird. Über eine Marke AG, die nach dem Beendigen von Teilabläufen wieder angesprungen wird, wird ein Schritt 3.1 erreicht, in dem ein Grundprogrammierungsmenü dargestellt wird. In einem Schritt 3.2 wird ein Menüpunkt gewählt.

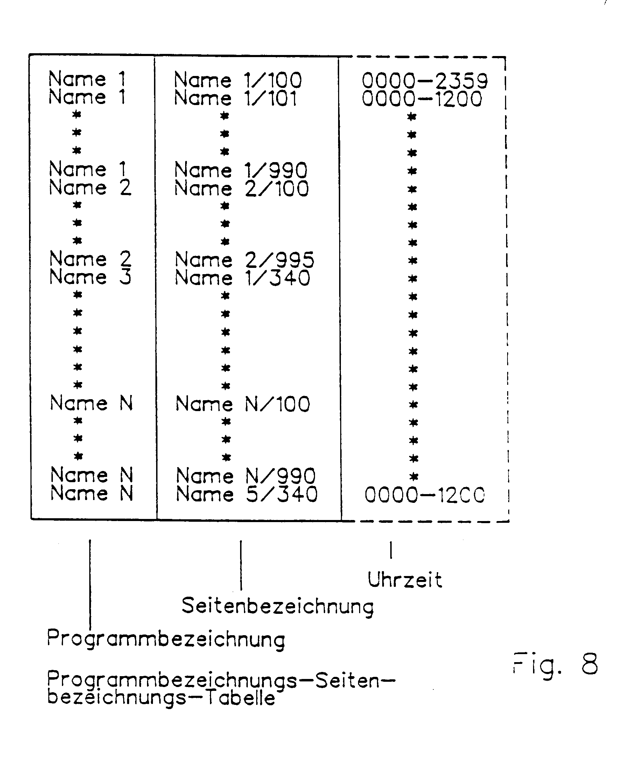

Sobald in der Grundprogrammierung ein Menüpunkt gewählt ist, wird überprüft (Schritt 3.3), ob ein Programmplatz oder eine Sonderliste programmiert werden soll. Ist Programmplatzprogrammierung gewählt, wird zum Eingeben einer Programmplatznummer durch entsprechende Darstellung auf dem Bildschirm aufgefordert (Schritt 3.4). Es kann nun festgelegt werden (Schritt 3.5), für welchen Programmplatz Daten eingegeben werden können. In modernen Videoempfangseinrichtungen können einige bis einige Dutzend Programmplätze programmiert werden. Sobald eine Nummer festgelegt ist, wird dazu aufgefordert (Schritt 3.6), eine Programmplatzbezeichnung einzugeben. Eine Programmplatzbezeichnung ist zwar für die Funktion einer Videoempfangseinrichtung nicht zwingend erforderlich, jedoch erleichtern derartige Bezeichnungen dem Benutzer die Übersicht darüber, auf welche Programme er durch bloßes Umschalten von Programmplatz auf Programmplatz, also ohne Handabstimmen des Tuners, umschalten kann. Dazu kann sich der Benutzer in einem entsprechenden Menüpunkt die Programmplatzbezeichnungen für alle Programmplätze anzeigen lassen. Ein Vorteil bei der Videoempfangseinrichtung gemäß dem Ausführungsbeispiel besteht darin, daß Programmplätze nicht nur Programmen zugeordnet werden können, wie sie von Sendern ausgestrahlt werden, sondern daß Programmplätze auch mit Sendungen zu einer bestimmten Thematik belegt werden können, unabhängig davon, in welchem Programm gesendet wird. Eine Programmplatzbezeichnung kann also z. B. lauten "ARD", "BBC", "NBC", aber auch z. B. "Wetter" oder "Börse". Eine Programmplatzbezeichnung kann eingegeben oder aus einer Vorschlagsliste gewählt und übernommen werden. Letzteres wird weiter unten anhand der Fig. 8 - 10 näher erläutert. Sobald die Programmplatzbezeichnung eingegeben oder gewählt ist (Schritt 3.7), wird zum Eingeben eines Kanals, d. h. einer Tunerfrequenz, aufgefordert (3.8). Nach dem Eingeben des Kanals (Schritt 3.9), fordert die Einrichtung zum Eingeben einer Seitenbezeichnung auf (Schritt 3.10). Was unter einer Seitenbezeichnung zu verstehen ist und welche Variationen beim Eingeben möglich sind, wird weiter unten anhand der Fig. 4 - 7 näher erläutert. Nach dem Eingeben der Seitenbezeichnung (3.11) ist zu entscheiden (3.12), ob eine weitere Seitenbezeichnung eingegeben werden soll. Ist dies der Fall, werden die Schritte 3.10-3.12 so lange wiederholt, wie neue Seitenbezeichnungen eingegeben werden sollen. Wird in Schritt 3.12 festgestellt, daß keine weitere Seitenbezeichnung mehr eingegeben werden soll, werden in einem Schritt 3.13 die Programmplatzbezeichnung, der Kanal und die Seitenbezeichnung für denjenigen Programmplatz in einer Programmplatz-Speichereinrichtung gespeichert, der der eingegebenen Programmplatznummer zugeordnet ist. Wird in einem anschließenden Schritt 3.14 festgestellt, daß Daten für einen weiteren Programmplatz eingegeben werden sollen, folgt der Ablauf ab Schritt 3.4 erneut. Andernfalls kehrt der Ablauf zur Marke AG zurück, also wieder zu Schritt 3.1.

Wird in Schritt 3.3 festgestellt, daß eine Sonderliste programmiert werden soll, laufen Schritte 3.10′ bis 3.12′ ab, die völlig den Schritten 3.10 - 3.12 entsprechen. In einem anschließenden Schritt 13.13′ werden die eingegebenen Daten allerdings nicht in Zuordnung zu einem Programmplatz, sondern in Zuordnung zu einer Sonderliste gespeichert. Diese Sonderliste dient dazu, Seitenbezeichnungen zu besonderen Themenkreisen zu speichern, realisiert also eine Funktion, wie sie auch über Programmplatzprogrammierung realisierbar ist, wie weiter oben erläutert. Es ist für einen Benutzer in der Regel anschaulicher, eine Sonderliste oder mehrere Sonderlisten zu Themenkreisen statt Programmplätze hierfür aufzurufen. Vom internen Funktionsablauf einer Videoempfangseinrichtung her ist es aber unerheblich, ob Seiten in Zuordnung zu einem bestimmten Programmplatz oder in Zuordnung zu einer sogenannten Sonderliste dargestellt werden.

Wie oben erläutert, wird in den Schritten 3.10 bzw. 3.10′ zum Eingeben einer Seitenbezeichnung aufgefordert. Eine Seitenbezeichnung setzt sich aus einer Programmplatzbezeichnung und einer Seitennummer zusammen. So senden z. B. sowohl das Erste wie auch das Zweite Deutsche Fernsehen auf einer jeweiligen Seite mit der Nummer 300 Sendungsinformation, jedoch für ihr jeweils eigenes Programm. Die Seiteninhalte sind also unterschiedlich. Die Programmbezeichnung dient dazu, den Tuner auf das entsprechende Programm einzustellen, und die Seitennummer dient dazu, den Textdecoder so zu aktivieren, daß er die entsprechende Seite im gesendeten Text sucht. Damit der Tuner das jeweilige Programm finden kann, benötigt er eine Frequenzangabe. Der Übersichtlichkeit halber wird jedoch unter "Programmbezeichnung" im folgenden immer ein Programmname verstanden. Die Steuereinrichtung der Videoempfangseinrichtung ist ohne weiteres dazu in der Lage, Namen oder Nummern in Frequenzen umzusetzen. Dies ist möglich, da zu jedem Programmplatz alle diese Daten jeweils gemeinsam gespeichert sind.

Würde in Schritt 3.10 zum Eingeben einer Seitennummer statt einer Seitenbezeichnung aufgefordert werden und würde dementsprechend in Schritt 3.11 ein solcher Name statt einer Bezeichnung eingegeben werden, würde ein Grundprogrammierungsablauf vorliegen, wie er von bekannten Videoempfangseinrichtungen her bekannt ist. Er ergäbe sich dann eine Speicherplatzbelegung in der Programmplatz-Speichereinrichtung, wie sie in Fig. 4 dargestellt ist. Hier sind zu jeder Programmplatznummer der Programmname, der zugehörige Kanal und die Seitennummern eingegeben, zu denen Seiten abgerufen werden sollen, wenn das entsprechende Programm eingestellt ist. Eine derartige herkömmliche Speicherplatzbelegung kann bei der automatischen Aktualisierung ohne weiteres verwendet werden, wie sie weiter unten anhand von Fig. 1 erläutert wird. Für andere Funktionen der Einrichtung ist es jedoch vorteilhafter, Seitenbezeichnungen statt nur Seitennummern zu speichern. Dies sei nun näher erläutert.

Es existieren Programme, die keinen Text senden, also auch keine Sendungsseiten, die über Sendungen dieses Programms informieren. Jedoch senden in der Regel andere Programme Sendungsseiten zu solchen Ohne-Text-Programmen. In Fig. 4 ist angenommen, daß das Programm mit der Nr. 3 ein Ohne-Text-Programm ist. Ein Benutzer kann also zu diesem Programm keine Seitennummern speichern. Möchte er Sendungsseiten zu diesem Programm ansehen, muß er die entsprechenden Seitennummern in einem anderen Programm eingeben und dort aufrufen.

Dieser Nachteil ist überwunden, wenn zugeordnet zu jedem Programmplatz nicht nur Seitennummern, sondern Seitenbezeichnungen abgelegt werden, wie dies in Fig. 5 veranschaulicht ist. Dort ist angenommen, daß Sendungsseiten für das Programm Nr. 3 im Programm 1 mit der Seitennummer 341 und im Programm 2 mit der Seitennummer 345 zu finden sind. Entsprechend wird in Schritt 3.11 die Seitenbezeichnung "Name 1/341˝ und dann "Name 2/345˝ in der Grundprogrammierung eingegeben. Wählt der Benutzer später im Textmode einen Menüpunkt für das Darstellen von Textseiten aus, während er sich im dritten Programm befindet, werden ihm Seiten für das dritte Programm angezeigt, obwohl dieses Programm gar keine Textseiten sendet. Der Tuner stellt vielmehr auf das erste Programm und danach auf das zweite Programm und sucht jeweils die Seiten mit den genannten Nummern.

Durch das Programm 4 in Fig. 5 ist ein Fall veranschaulicht, bei dem ein Programmplatz einem Thema gewidmet ist. Dementsprechend ist für den vierten Programmplatz gar kein Programmkanal eingegeben. Als Seitenbezeichnungen sind alle Seitenbezeichnungen eingetragen, die ein bestimmtes Thema, z. B. das Wetter oder die Börse, betreffen. In der Darstellung ist angenommen, daß diese Seiten in unterschiedlichen Programmen alle dieselbe Nummer tragen, was jedoch nicht notwendigerweise der Fall ist. Bei der Belegung gemäß Fig. 5 für das vierte Programm werden jeweils die Seiten mit der Nummer 510 im ersten, zweiten und fünften Programm aufgerufen.

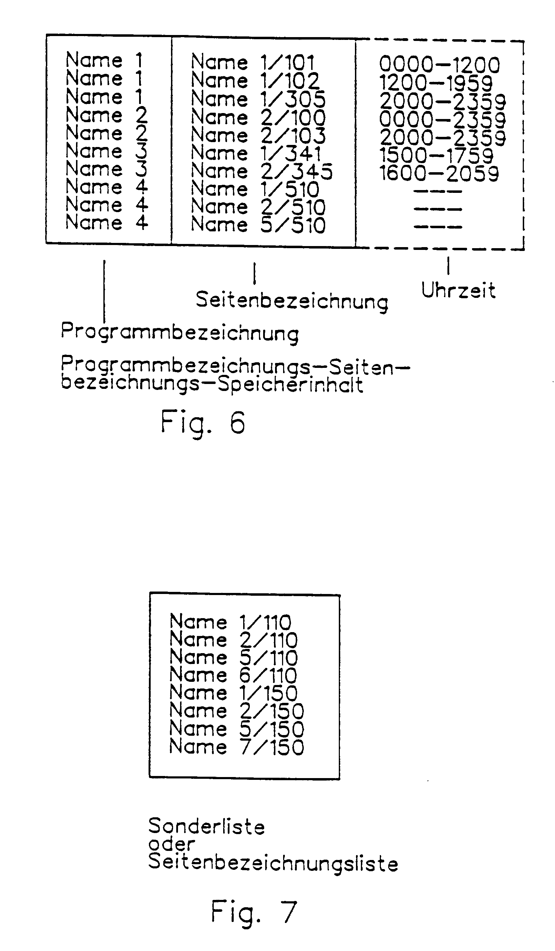

Die Darstellungen der Fig. 4 und 5 betreffen Fälle, in denen Seitennamen bzw. Seitenbezeichnungen direkt Programmplätzen zugeordnet sind. Ohne weiteres ist aber auch eine Speicherbelegung möglich, wie sie in Fig. 6 dargestellt ist. Es handelt sich um eine fortlaufende Liste mit den Programmbezeichnungen und den Seitenbezeichnungen, wie sie in Fig. 5 verwendet sind. Zusammen mit dieser Liste wird ein Programmplatzspeicher verwendet, der lediglich die Programmplatznummer, den Programmnamen und den zugehörigen Kanal speichert. Die Seitenbezeichnungen für alle Programme befindet sich in der einheitlichen Liste gemäß Fig. 6.

Die Liste gemäß Fig. 6 kann wahlweise außer einer Spalte mit Programmbezeichnungen und einer Spalte mit Seitenbezeichnungen noch eine Spalte mit Uhrzeiten enthalten. Entsprechend müßte im Grundprogrammierablauf gemäß Fig. 3 ein zugehöriger Eingabeschritt vorhanden sein, um die zunächst leere Liste nicht nur mit Programmbezeichnungen und Seitenbezeichnungen, sondern auch mit Uhrzeitangaben zu füllen. Die Uhrzeiten betreffen den Zeitraum, der durch Sendungsseiten abgedeckt wird. Betreffen die Seitenbezeichnungen allgemeine Informationsseiten, z. B. über das Wetter oder die Börse, bestehen keine Zeitzuordnungen, weswegen dann die Uhrzeitenspalte an den entsprechenden Stellen leer ist. Die Uhrzeiten sind bei einer vorteilhaften Ausführungsvariante zum einfachen Blättern in Seiten in unterschiedlichen Programmen bei dauernd gleichem Zeithorizont von Vorteil.

Fig. 7 stellt den Inhalt einer Sonderliste dar, wie sie mit Hilfe der genannten Schritte 3.10′ - 3.13′ erstellt wird. Hier ist keine Spalte mit Programmbezeichnungen erforderlich, da ja die Liste insgesamt als solche abgefragt wird. Eine solche bloße Seitenbezeichnungsliste kann auch beim bereits erwähnten automatischen Aktualisieren (Fig. 11) verwendet werden.

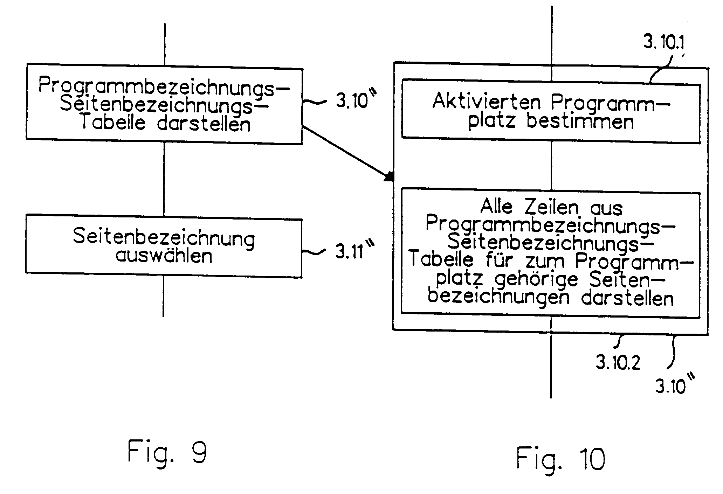

Als Eingabehilfe beim Eingeben von Seitenbezeichnungen dient vorteilhafterweise eine Programmbezeichnungs-Seitenbezeichnungs-Tabelle, wie sie in Fig. 8 dargestellt ist. Diese enthält für sämtliche Programme die Seiten, die über Sendungen zu diesem Programm informieren, und darüber hinaus unter Umständen alle oder eine Mehrzahl von Seiten für allgemeine, insbesondere themenbezogene Information. Gemäß Fig. 9 wird in einem Schritt 3.10′′ statt des Schrittes 3.10 diese Programmbezeichnungstabelle dargestellt, aus der der Benutzer in einem Schritt 3.11˝ die Seitenbezeichnung für eine gewünschte Seite auswählt. Er erspart sich dadurch entsprechende Handeingabe. Die Übersichtlichkeit der Darstellung wird dann gesteigert, wenn Schritt 3.10′ in zwei Unterschritte 3.10.1 und 3.10.2 aufgegliedert wird, wie sie in Fig. 10 dargestellt sind. Es wird nämlich zunächst der aktivierte Programmplatz bestimmt, und dann wird aus der Tabelle gemäß Fig. 8 nur derjenige Ausschnitt zur Anzeige gebracht, der die zum Programmplatz gehörigen Seitenbezeichnungen darstellt.

In Fig. 1 ist die Programmbezeichnungs-Seitenbezeichnungs-Tabelle als Teil des ROM dargestellt. In diesem Fall ist sie unveränderbar, so daß sie dem Benutzer keine Hilfe mehr bietet, wenn von Sendeanstalten Seitennummern zu bestimmten Themen geändert werden oder neue Seitennummern aufgenommen werden. Soll diese Tabelle leicht aktualisiert werden können, z. B. mit Hilfe eines Händler-Serviceprogramms, wird die Tabelle vorteilhafterweise im EEPROM statt im ROM abgelegt.

Auch die Programmbezeichnungs-Seitenbezeichnungs-Tabelle kann eine Spalte zu Uhrzeiten enthalten, aus dem anhand von Fig. 6 erläuterten Grund.

Anhand von Fig. 11 wird nun das bereits mehrfach erwähnte Aktualisierungsprogramm erläutert. Dieses dient dazu, Textseiten in vorgegebenen Zeitabständen in einen Seitenspeicher einzulesen. Relativ aktuelle Seiten können dann jederzeit vom Benutzer abgerufen werden, also auch dann, wenn keine Textseiten gesendet werden, oder wenn der Tuner nicht verstellt werden kann, da gerade eine Sendung angesehen oder aufgezeichnet wird.

Zum Aktualisieren von Textseiten muß der Tuner jeweils zum Empfangen eines bestimmten Programms eingestellt werden und der Textdecoder mit Seitennummern versorgt werden. Dies kann durch Abarbeiten der Listen erfolgen, wie sie beispielshaft in den Fig. 4 - 7 dargestellt sind. Es kann also z. B. beim Abarbeiten der Liste gemäß Fig. 4 der Tuner zunächst auf Programm 1 gestellt werden, und dann werden alle Seiten zu Programm 1 gesucht. Dieses Vorgehen wird dann für einen Programmplatz nach dem anderen ausgeführt. Beim Verwenden der Liste gemäß Fig. 5 kann ebenfalls mit dem Programmplatz 1 begonnen werden, und es werden die zugehörigen Seitenbezeichnungen ausgelesen. Nun kann es sein, daß sich hierunter eine Seitenbezeichnung befindet, die ein Umtunen erforderlich macht. Liegt ein solcher Fall vor, kann entweder das Umtunen tatsächlich vorgenommen werden, um zunächst alle Seiten einzulesen, die für ein bestimmtes Programm erwünscht sind, oder es kann zunächst gesucht werden, ob sich unter anderen Programmplätzen noch Seitenbezeichnungen mit derjenigen Programmbezeichnung finden, für die der Tuner gerade aktiv ist. Ist dies der Fall, werden erst diese Seiten eingelesen. Erst dann wird auf den nächsten Programmplatz umgeschaltet, wo sich der Vorgang entsprechend wiederholt. Werden Listen gemäß den Fig. 6 oder 7 verwendet, ist jeweils die Spalte mit den Seitenbezeichnungen abzuarbeiten. Auch hier kann Zeile für Zeile bearbeitet werden, oder es wird vor dem Umstellen des Tuners überprüft, ob sich innerhalb der Liste in einer tieferen Zeile noch eine Seitenbezeichnung findet, deren Programmbezeichnung die des gerade aktivierten Programms ist, in welchem Fall dann die zugehörige Seite eingelesen wird, bevor der Tuner verstellt wird.

Beim Programmablauf von Fig. 11 ist der Einfachheit halber davon ausgegangen, daß Zeile für Zeile in den entsprechenden Spalten in den genannten Listen der Reihe nach abgearbeitet wird. In einem ersten Schritt 11.1 wird die Zeilennummer auf 0 gesetzt. Dann wird die Zeilennummer um 1 erhöht (Schritt 11.2), und es wird untersucht, ob die letzte Zeile um 1 überschritten ist. Ist dies er Fall, endet das Aktualisierungsprogramm. Ist die letzte Zeile noch nicht überschritten, wird eine Zeile aus einer Seitenbezeichnungsspalte gelesen, sei dies nun eine Spalte in einem Programmplatz gemäß den Fig. 4 oder 5 oder in einer Liste gemäß den Fig. 6 oder 7 (11.4). Entsprechend der ausgelesenen Programmbezeichnung wird der Tuner eingestellt (11.5), und anschließend wird die Zeit gesetzt (11.6), zu der das Suchen nach einer gewünschten Seite beginnt. Während des Suchens nach der Seite (11.7) wird dauernd untersucht, ob eine gesetzte Zeitspanne für das Suchen abgelaufen ist (11.8). Wurde die Seite vor Ablauf der Zeitspanne nicht gefunden, kehrt das Verfahren zum Schritt 11.2 zurück, in dem die Zeilennummer erhöht wird. Wurde die Seite gefunden, wird sie zunächst in einem Zwischenspeicher gespeichert (11.8), welches Speichern im Textdecoder selbst oder in dem von der Steuereinrichtung kontrollierten RAM erfolgen kann. Die Seite wird nicht ohne weiteres in den Seitenspeicher übernommen, um zu verhindern, daß eine ordnungsgemäß abgespeicherte Seite durch eine fehlerhafte Seite überschrieben wird. Die zwischengespeicherte Seite wird daher einer Plausibilitätskontrolle (Schritt 11.9) unterzogen, und sie wird verworfen (Schritt 11.10), falls sie nicht in Ordnung ist. Für die Plausibilitätsprüfung bestehen verschiedene Möglichkeiten. So wird für besonders wichtige Daten der Sendung eine Prüfzahl mitgesendet. In der Plausibilitätskontrolle wird überprüft, ob die empfangenen Daten ebenfalls die Prüfzahl ergeben. Für andere Daten, z. B. Sendungstitel, für die keine Prüfzahl gesendet wird, kann überprüft werden, ob die empfangenen Zeichencodes plausibel sind. So muß jedes Titelzeichen ein solches sein, das dem ASCII-Code unterliegt. Wurde eine Seite verworfen, kann in einem Schritt 11.11 die Zeilenzahl erniedrigt werden, damit sie nach dem Erhöhen im folgenden Schritt 11.2 wieder auf dem alten Wert steht, so daß die verworfene Seite nochmals gesucht wird. Ist die Seite in Ordnung, wird sie in einem Schritt 11.12 im Seitenspeicher abgespeichert.

Beim Abarbeiten des Aktualisierungsprogramms wirkt die Steuereinrichtung also als Aktualisierungseinrichtung, die den Tuner und den Textdecoder auf Grundlage von Seitenbezeichnungen ansteuert, die gewünschten Seiten aus dem gesendeten Text mit Hilfe des Textdecoders ausliest und die aufgefundenen Seitendaten in eine Textseiten-Speichereinrichtung einschreibt.

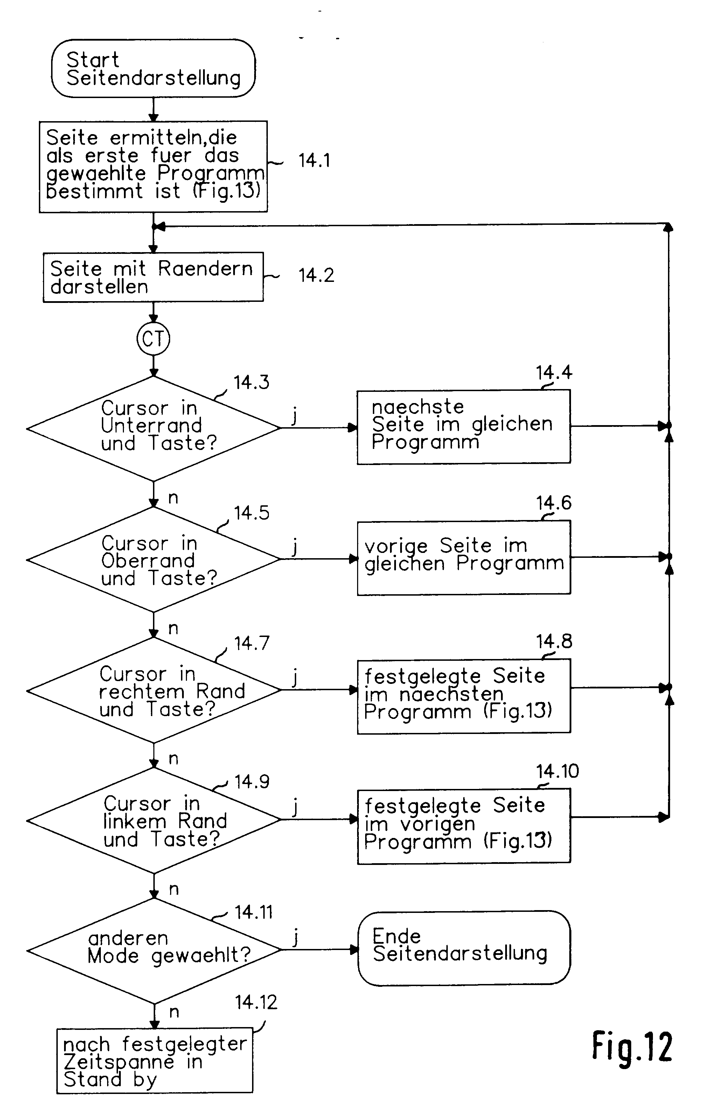

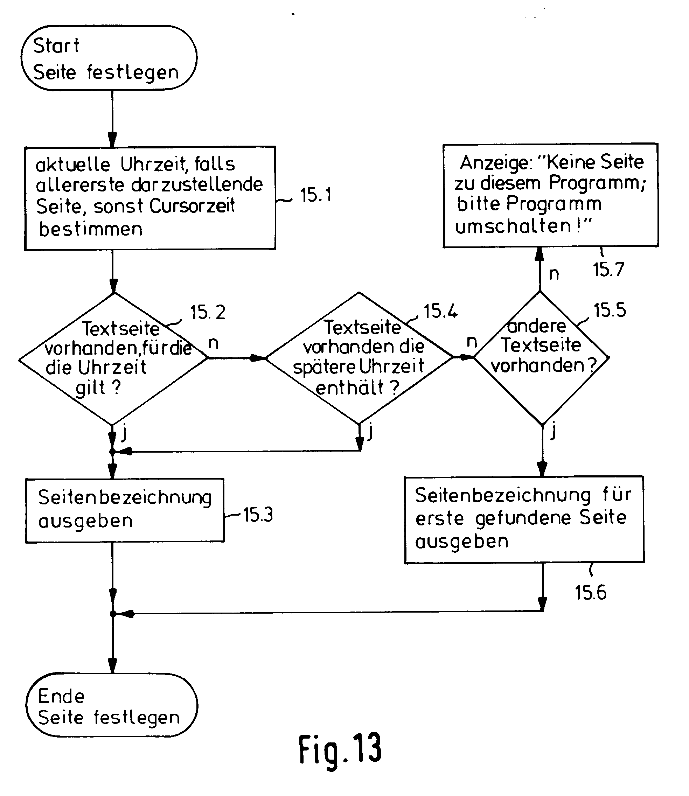

Anhand von Fig. 12 wird nun näher erläutert, wie der Menüpunkt "Aktualisierte Textseiten darstellen" vorteilhafterweise erfolgt. Es wird zunächst diejenige Seite ermittelt, die als erste für das gewählte Programm bestimmt ist. Wie das Festlegen erfolgt, wird weiter unten anhand von Fig. 13 beschrieben. Ist die Seite ermittelt (Schritt 14.1), werden die Seitendaten mit Rand auf einem Bildschirm dargestellt, also in der üblichen Weise (Schritt 14.2). Diese Ränder dienen dazu, die Bedienfreundlichkeit beim Umschalten von einer Seite zur anderen und von einem Programm zum anderen zu erhöhen. Schritte hierfür folgen ab einer Marke CT.

Wenn eine Seite auf einem Bildschirm dargestellt ist und eine Kursorsteuerung vorhanden ist, kann der Kursor von Zeile zu Zeile nach oben oder nach unten bewegt werden. Wird die Zeilenverschiebetaste dauerbetätigt, springt der Kursor von einer Zeile zur nächsten mit einem vorgegebenen Zeittakt.

Beim Ausführungsbeispiel gemäß Fig. 12 ist die Steuereinrichtung so ausgebildet, daß sie als Seitenumschalteinrichtung wirkt, die auf eine Seite mit höherer Nummer im selben Programm schaltet, wenn der Kursor in den unteren Bildrand verschoben wird und dann eine vorgegebene Taste betätigt wird, zum Beispiel die Verstelltaste selbst für das Bewegen des Kursors nach oben oder unten. Gelangt der Kursor durch Dauerbetätigen einer Verstelltaste in den unteren Randbereich, erfolgt das Seitenumschalten nicht mit dem kurzen Takt des Zeilenweiterschaltens, sondern erst mit einem längeren Takt, so daß der Benutzer die Möglichkeit hat, die Taste loszulassen oder den Kursor in anderer Richtung zu bewegen, falls er gar kein Seitenumschalten wünscht. Gemäß Fig. 14 wird in einem Schritt 14.3 abgefragt, ob sich der Kursor im Unterrand befindet und, falls dies der Fall ist, eine vorgegebene Taste betätigt wurde. Ist beides der Fall, wird auf die nächste Seite im gleichen Programm umgeschaltet (Schritt 14.4), d. h. die in einer Seitenbezeichnungsliste für dasselbe Programm festgelegte nächste Seite wird aus dem Seitenspeicher ausgelesen und mit Rändern versehen zur Darstellung gebracht (Schritt 14.2).

Steht der Kursor nicht im Unterrand, sondern im Oberrand und wird die vorgegebene Taste betätigt, wird dies in einem Schritt 14.5 festgestellt. In einem Schritt 14.6 wird dann die vorige Seite im gleichen Programm ausgewählt. Befindet sich der Kursor im rechten Rand und wird die vorgegebene Taste betätigt, wird dies in einem Schritt 14.7 festgestellt. Es wird dann auf den nächsthöheren Programmplatz umgeschaltet und dort eine festgelegte Seite ausgewählt (Schritt 14.8), die dann mit Rändern versehen zur Anzeige gebracht wird (Schritt 14.2). Befindet sich der Kursor dagegen im linken Rand und wird die festgelegte Taste betätigt, wird dies in einem Schritt 14.9 festgestellt, und eine festgelegte Seite im vorigen Programm wird gesucht (Schritt 14.10). Wie bereits weiter oben erwähnt, wird das Festlegen von Seiten anhand von Fig. 15 weiter unten erläutert.

Das Umschalten zwischen Seiten erfolgt solange, bis ein anderer Mode gewählt wird, was in einem Schritt 14.11 festgestellt wird, oder bis eine festgelegte Zeitspanne ohne Tastenbetätigen verstrichen ist. In diesem Fall wird in den Stand-by-Mode umgeschaltet (Schritt 14.12). Der Überwachungsschritt 14.11 muß nicht notwendigerweise im Seitendarstellungs-Unterprogramm ablaufen, sondern er kann auch im Hintergrundprogramm ausgeführt werden, was bereits eingangs beim Beschreiben von Fig. 2 erwähnt wurde.

Im Flußdiagramm von Fig. 12 ist die Marke CT, an die sich die Kursorsteuerung gemäß Fig. 14 anschließt, nur in demjenigen Zweig eingezeichnet, der das Darstellen aktualisierter Textseiten betrifft. In der Standardtextdarstellung fehlt dagegen diese Marke. Es könnte aber auch dort die beschriebene Kursorsteuerung verwendet werden. Allerdings fällt dann der Vorteil weg, daß ohne jegliche Wartezeit in Seiten geblättert werden kann. Es muß vielmehr jedesmal gewartet werden, bis der Decoder eine benachbarte Seite gefunden hat. Wird durch Bewegen des Kursors in den rechten oder linken Rand und das Betätigen der vorgegebenen Taste das Programm gewechselt, muß zusätzlich der Tuner neu eingestellt werden, bevor eine neue Seite gesucht werden kann. Dies ändert aber nichts an der Tatsache, daß es mit Hilfe der Randbereiche sehr einfach ist, in Seiten zu blättern. Bei fehlender Aktualisierung kann die Wartezeit beim Blättern dadurch verkürzt oder gar ausgeschlossen werden, daß jeweils aktuell die dargestellte Seite und die vier benachbarten Seiten in Seitenspeicherbereiche eingeschrieben werden.

Beim Ausführungsbeispiel wurde davon ausgegangen, daß beim Erreichen des oberen oder unteren Randbereichs in eine Seite im selben Programm umgeblättert wird, und daß beim Umblättern mit Hilfe des Kursors im rechten oder linken Randbereich das Programm gewechselt wird. Diese Randzuordnung kann jedoch beliebig geändert werden. Wesentlich ist nur, daß ein Bildgenerator vorhanden ist, der dafür sorgt, daß die Seitendaten mit Randbereichen versehen werden, daß eine Kursorsteuereinrichtung vorhanden ist, mit deren Hilfe der Kursor bis in die genannten Randbereiche verschoben werden kann, und daß eine Seitenumschalteinrichtung dafür sorgt, daß dann, wenn der Kursor in einen Randbereich bewegt ist und eine vorgegebene Taste betätigt wird, auf eine zuvor festgelegte Seite umgeschaltet wird.

Das Festlegen einer Seite erfolgt vorteilhafterweise so, wie dies in Fig. 13 dargestellt ist. Wird ein Menüpunkt, durch den Seiten zur Anzeige gebracht werden können, erstmals erreicht, wird in einem Schritt 15.1 die aktuelle Uhrzeit bestimmt. Es wird dann überprüft, ob sich zum aktivierten Programm eine Textseite findet, für die die aktuelle Uhrzeit gilt (Schritt 15.2). Diese Suche kann auf unterschiedliche Arten erfolgen. Sollen nur aktualisierte Seiten dargestellt werden, ist es möglich, die Inhalte der abgespeicherten Seiten für das aktivierte Programm auf die aktuelle Uhrzeit hin abzusuchen und diejenige Seite zur Anzeige zu bringen, die die aktuelle Uhrzeit enthält. Handelt es sich um eine Videoempfangseinrichtung ohne derartigen Speicher, oder sollen auch Seiten gesucht werden können, die sich nicht im aktualisierten Seitenspeicher befinden, ist eine Tabelle zu verwenden, die eine Zuordnung zwischen Seitenbezeichnungen und Uhrzeiten liefert, also Aufstellungen, wie sie in den Fig. 6 und 8 dargestellt sind. Wird eine Textseite gefunden, für die die aktuelle Uhrzeit gilt, wird die Seitenbezeichnung ausgegeben (Schritt 15.3), so daß also die darzustellende Seite festgelegt ist. Findet sich dagegen keine Textseite für die aktuelle Uhrzeit, wird, wie bereits erwähnt, eine Textseite gesucht, für die eine spätere Uhrzeit gilt. Wird eine solche gefunden (Schritt 15.4), wird die Seitenbezeichnung ausgegeben (Schritt 15.3). Andernfalls wird gesucht, ob irgendeine andere Textseite für das aktivierte Programm vorhanden ist (Schritt 15.5). Ist dies der Fall, wird die Seitenbezeichnung für die erste gefundene Seite ausgegeben (Schritt 15.6). Wird keine Seite gefunden, wird dies angezeigt (Schritt 15.7).

Es sei angenommen, daß die aktuelle Uhrzeit "10.00 Uhr vormittags" ist und daß für das aktivierte Programm eine zugehörige Seite vorhanden ist. Diese wird also dargestellt. Nun blättere der Benutzer mit Hilfe eines Kursors in den Seiten zum aktivierten Programm, und zwar solange, bis er eine Sendungsseite für die Abendsendungen erreicht hat. Er interessiere sich nun auch für Abendsendungen anderer Programme. Die Videoempfangseinrichtung gemäß dem Ausführungsbeispiel zeichnet sich nun dadurch aus, daß sie, sobald der Kursor von der aktuellen Uhrzeit auf eine neue Uhrzeit in einer Sendungsseite verschoben wurde, diese Uhrzeit als neuen Zeithorizont verwendet. Wird nun also das Programm gewechselt, wird zum Festlegen der ersten anzuzeigenden Seite für dieses Programm in Schritt 15.1 nicht mehr die aktuelle Uhrzeit bestimmt, sondern es wird festgestellt, auf welcher Zeit der Kursor in der zuletzt dargestellten Sendungsseite stand. Im folgenden Schritt 15.2 wird dann nach einer Textseite gesucht, die für diese Kursorzeit gilt. Solange der Kursor in Zeitrichtung nicht verstellt wird, bleibt die Kursorzeit erhalten. Wird der Kursor also nur nach links oder rechts bewegt, um in andere Programme umzuschalten, ändert sich die Kursorzeit nicht, falls ein Programm erreicht wird, das keine Seite mit der Kursorzeit oder keine Seite mir irgendeiner festgelegten Zeit enthält. So kann sich der Benutzer leicht einen Überblick verschaffen, welche Programme zu der von ihm mit Hilfe des Kursors angewählten Uhrzeit senden und was die Titel der Sendungen sind.

Die Videoempfangseinrichtung gemäß der eben beschriebenen Ausführungsform verfügt also über eine Seitenumschalteinrichtung zum Umschalten von Textseiten aus einem Program auf Textseiten aus einem anderen Programm, wobei das Umschalten mit Hilfe der vorgenannten Kursorzeit vorgenommen wird. Dabei ist es unerheblich, ob der erste Einstieg mit Hilfe der aktuellen Zeit erfolgte oder ob beim ersten Darstellen die erste Seite aus einer Liste für das aktivierte Programm ausgewählt wurde.

## Patentansprüche

1. Videoempfangseinrichtung mit
- einem Tuner (1), der über eine Programmplatz-Wähleinrichtung durch Programmbezeichnungen auf ein vorgegebenes Fernsehprogramm einstellbar ist,
- einem Textdecoder (2), der zum Decodieren von Textdaten, wie sie nach Textseiten geordnet in Fernsehsignalen gesendet werden, mit Seitennummernsignalen ansteuerbar ist, wobei mit jeder Textseite die aktuelle Uhrzeit übertragen wird,
- einer Seiten-Wähleinrichtung (CPU, 3) zum Auswählen einer Textseite aus dem empfangenen Fernsehsignal eines Fernsehprogramms durch Einstellen von Tuner (1) und Textdecoder (2), abhängig von einer jeweiligen Programmbezeichnung und einer jeweiligen Seitennummer,
- einem Seitenbezeichnungsspeicher (3) zum Speichern von Seitenbezeichnungen, von denen sich jede aus einer Programmbezeichnung und einer Seitennummer zusammensetzt,
- und einer Seitenbezeichnungs-Ausleseeinrichtung (CPU) zum Auslesen von Seitenbezeichnungen aus dem Seitenbezeichnungsspeicher (3) unabhängig von einem eingestellten Fernsehprogramm und zum Ausgeben der jeweils ausgelesenen Seitenbezeichnung an Tuner (1) und Textdecoder (2),
- einem Textseiten-Speicher (4) zum Speichern decodierter Textdaten von Textseiten verschiedener Fernsehprogramme und
- einer Aktualisierungseinrichtung (CPU),
-- zum automatischen Ansteuern des Tuners (1) und des Textdecoders (2) auf Grundlage von Seitenbezeichnungen, die die Seitenbezeichnungs-Ausleseeinrichtung (CPU) in einer vorgegebenen Reihenfolge aus dem Seitenbezeichnungsspeicher (3) liest,
-- zum automatischen Auslesen von Textdaten aus einem Fernsehsignal entsprechend den Einstellungen von Tuner (1) und Textdecoder (2) und
-- zum automatischen Einschreiben dieser Textdaten in den Textseiten-Speicher (4),
**gekennzeichnet durch**
- einen Sendungsspeicher (4) zum Speichern von Textdaten, die Sendungsdaten wie Anfangszeit, Endzeit und Titel von Sendungen enthalten, aus übertragenen Textseiten, die diese Sendungsdaten zu Sendungen enthalten,
- eine Sendungsdaten-Ausleseeinrichtung (CPU) zum Auslesen von im Sendungsspeicher (4) gespeicherten Textdaten und zum Ausgeben an einen Bildschirm (6),
- einen Bildgenerator (5) zum Erzeugen von Kursor-Bilddaten für einen Kursor und von Text-Bilddaten aus den decodierten Textdaten und zum Ausgeben von decodierten Kursor- und Text-Bilddaten zum gemeinsamen Darstellen dieser Bilddaten, sei es aus dem Textseiten-Speicher (4), dem Sendungsspeicher (4) oder direkt aus dem Textdecoder (2), an einen Bildschirm (6), wobei die darzustellenden Bilddaten so beschaffen sind, daß jede Textseite beim Darstellen an allen vier Seiten von einem Bildrand, der von einer Kursorsteuereinrichtung (CPU, 7) anwählbar ist, umgeben ist,
- eine Seitenumschalteinrichtung (CPU, 3, 7) zum Umschalten und Auswählen der darzustellenden Textseite aus dem Textseiten-Speicher (4) unabhängig vom eingestellten Fernsehprogramm
- und eine Kursorsteuereinrichtung (CPU, 7), die mit der Sendungsdaten-Ausleseeinrichtung, dem Bildgenerator (5) und der Seitenumschalteinrichtung (CPU, 3, 7) verbunden ist, zum Verschieben eines Kursors im Bereich des darzustellenden Bildes, das Text und Bildrand enthält, zum Übernehmen von Textdaten in den Sendungsspeicher (4) und zum Umschalten der Seitenumschalteinrichtung (CPU, 7) auf andere darzustellende Textseiten beim Betätigen einer vorgegebenen Taste einer Kommandoeingabeeinrichtung (7).

2. Videoempfangseinrichtung nach Anspruch 1,
**gekennzeichnet durch** eine Seitenumschalteinrichtung (CPU, 3, 7)
- zum Umschalten auf eine Textseite mit höherer Nummer, wenn der Kursor in einen ersten der vier Bildränder verschoben wird und dann die vorgegebene Taste betätigt wird,
- zum Umschalten auf eine Seite mit niedrigerer Nummer, wenn der Kursor in einen zweiten Bildrand verschoben wird und dann die vorgegebene Taste betätigt wird, wobei der zweite Bildrand parallel zum ersten Bildrand verläuft,
- zum Umschalten auf ein Programm höherer Nummer und dort auf eine im Seitenbezeichnungsspeicher gespeicherte Seitennummer, wenn der Kursor in einen dritten Bildrand verschoben wird und dann die vorgegebene Taste betätigt wird, wobei der dritte Bildrand rechtwinklig zum ersten Bildrand verläuft und
- zum Umschalten auf ein Programm niedrigerer Nummer und dort auf eine vorgegebene Seitennummer, wenn der Kursor in einen vierten Bildrand verschoben wird, und dann die vorgegebene Taste betätigt wird, wobei der vierte Bildrand parallel zum dritten Bildrand verläuft.

3. Videoempfangseinrichtung nach Anspruch 1, **gekennzeichnet dadurch,** daß die Seitenumschalteinrichtung Mittel enthält, die beim Umschalten von Textseiten aus einem Programm auf Textseiten eines anderen Programms von den im Textseiten-Speicher (4) gespeicherten Textdaten zu Textseiten, die Angaben zu Sendungen enthalten, den Inhalt auf das Vorhandensein von solchen Zeitinformationen, wie z. B. Anfangszeiten von Sendungen, prüfen, die der Uhrzeit entsprechen, auf die der Kursor in der zuletzt dargestellten Textseite stand, so daß als erste Textseite in einem durch Umschalten erreichten Programm diejenige ausgewählt wird, die Information im entsprechenden Zeitbereich enthält.

4. Videoempfangseinrichtung nach Anspruch 3,
**gekennzeichnet dadurch**, daß die Seitenumschalteinrichtung so ausgebildet ist, daß sie beim Umschalten von Textseiten aus einem Programm auf Textseiten aus einem anderen Programm, diejenige Textseite auswählt, die Information in demjenigen Zeitbereich enthält, in den die aktuell übertragene Uhrzeit fällt.

## Claims

1. A video receiver comprising
- a tuner (1) which can be set to a given television program via a program position selector by means of program designations,
- a text decoder (2) which, for the decoding of text data such as transmitted in television signals arranged in the form of pages of text, can be driven by page number signals, where the current clock time is transmitted with each page of text,
- a page selector device (CPU, 3) for the selection of a page of text from the received television signal of a television program by the setting of the tuner (1) and text decoder (2) in dependence upon a respective program designation and a respective page number,
- a page designation memory (3) for the storage of page designations, each of which is composed of a program designation and a page number,
- and a page designation read-out device (CPU) for the reading-out of page designations from the page designation memory (3) independently of a set television program and for the output of the respective read-out page designation to the tuner (1) and text decoder (2),
- a text page memory (4) for the storage of decoded text data of text pages of different television programs and
- an updating device (CPU)
-- for the automatic driving of the tuner (1) and the text decoder (2) on the basis of page designations read-out by the page designation read-out device (CPU) in a given sequence from the page designation memory (3),
-- for the automatic read-out of text data from a television signal in accordance with the settings of tuner (1) and text decoder (2) and
-- for the automatic input of said text data into the text page memory (4),
characterised by
- a transmission memory (4) for the storage of text data which contain transmission data such as start time, end time and title of transmissions, from transmitted text pages containing said transmission data relating to transmissions,
- a transmission data read-out device (CPU) for the reading-out of text data stored in the transmission memory (4) and for the output of the latter to a screen (6),
- a picture generator (5) for the generation of cursor picture data for a cursor and text picture data from the decoded text data and for the output of decoded cursor- and text picture data for the common representation of said picture data, be this from the text page memory (4), from the transmission memory (4) or directly from the text decoder (2), to a screen (6), where the picture data to be represented are such that on representation each text page is surrounded on all four sides by a picture margin which is selectable by a cursor control device (CPU, 7),
- a page switch-over device (CPU, 3, 7) for the switching-over and selection from the text page memory (4) of the text page to be represented, independently of the set television program
- and a cursor control device (CPU, 7) which is connected to the transmission data read-out device, the picture generator (5) and the page switch-over device (CPU, 3, 7), for displacing a cursor in the region of the picture to be represented comprising text and picture margin, for the transfer of text data into the transmission memory (4) and for the switching-over, to different text pages to be represented, of the page switch-over device (CPU, 7) on the actuation of a given key of a command input device (7).

2. A video receiver as claimed in Claim 1, characterised by a page switch-over device (CPU, 3, 7)
- for switching-over to a text page with a higher number when the cursor is displaced into a first of the four picture margins and then the given key is actuated,
- for switching-over to a page with a lower number when the cursor is displaced into a second picture margin and then the given key is actuated, where the second picture margin extends in parallel to the first picture margin,
- for switching-over to a program with a higher number and therein to a page number stored in the page designation memory when the cursor is displaced into a third picture margin and then the given key is actuated, where the third picture margin extends at right angles to the first picture margin and
- for switching-over to a program with a lower number and therein to a given page number when the cursor is displaced into a fourth picture margin and then the given key is actuated, where the fourth picture margin extends in parallel to the third picture margin.

3. A video receiver as claimed in Claim 1, characterised in that the page switch-over device comprises means which, in the event of switching-over from text pages of one program to text pages of another program, check the contents of the text data of text pages stored in the text page memory (4) containing information relating to transmissions for the presence of time information, such as for example start times of transmissions, corresponding to the clock time at which the cursor was located in the last represented page of text, so that the first page of text selected in a program reached as a result of a switch-over is that containing information in the corresponding time range.

4. A video receiver as claimed in Claim 3, characterised in that the page switch-over device is designed such that in the event of switching-over from text pages of one program to text pages of another program it selects that text page which contains information in the time range in which the currently transmitted clock time falls.

## Revendications

1. Dispositif de réception vidéo avec :
- un tuner (1), qui, par des repères des programmes, peut être réglé sur un programme télévisé prédéfini, par l'intermédiaire d'un sélecteur de position des programmes,
- un décodeur de texte (2), destiné au décodage des données de texte, telles qu'elles sont émises dans des signaux de télévision, ordonnés d'après des pages de texte, l'heure actuelle étant diffusée avec chaque page de texte,
- un sélecteur de pages (UC, 3) destiné à sélectionner une page de texte dans le signal de télévision reçu d'un programme télévisé, par l'intermédiaire du réglage du tuner (1) et du décodeur de texte (2), la sélection dépendant de chaque repère de programme et de chaque numéro de page,
- une mémoire de repère de page (3) destinée à mémoriser les repères de page, dont chacun comprend un repère de programme et un numéro de page,
- un lecteur de repère de page (UC) destiné à la lecture des repères de page à partir de la mémoire de repère de page (3) indépendamment d'un programme télévisé en marche et destiné à délivrer au tuner (1) et au décodeur de texte (2) chaque repère de page lu,
- une mémoire de pages de texte (4) destinée à mémoriser les données de texte décodées des pages de texte de différents programmes télévisés, et
- un dispositif de mise à jour (UC) destiné à
-- mettre en marche automatiquement le tuner (1) et le décodeur de texte (2) en se basant sur les repères de page, qui sont lus par le lecteur des repères de page (UC) dans un ordre défini à partir de la mémoire des repères de page (3),
-- à lire automatiquement les données de texte à partir d'un signal de télévision conformément aux réglages du tuner (1) et du décodeur de texte (2), et
-- à enregistrer automatiquement ces données de texte dans la mémoire des pages de texte (4),
caractérisé en ce que
- une mémoire des émissions (4) destinée à mémoriser des données de texte, qui contiennent des données des émissions, telles que l'heure de début, l'heure de fin et le titre des émissions, à partir des pages de texte diffusées, lesquelles contiennent ces données d'émission destinées aux émissions,
- un lecteur des données d'émissions (UC) destiné à lire les données de texte sauvegardées dans la mémoire d'émissions (4) et à émettre sur un écran (6),
- un générateur d'images (5) destiné à produire des données image-curseur pour un curseur et des données image-texte à partir des données de texte décodées et destiné à délivrer des données image-curseur et image-texte décodées, afin de représenter ensemble ces données d'image sur un écran (6), soit à partir de la mémoire des pages de texte (4), soit de la mémoire des émissions (4), soit directement à partir du décodeur de texte (2) ; les données d'image à représenter étant conçues de telle sorte que chaque page de texte représentée est bordée sur ses quatre côtés d'un contour d'image, qui peut être sélectionné par un dispositif de commande du curseur (UC, 7),
- un dispositif de décalage des pages (UC, 3, 7) destiné à décaler et à sélectionner la page de texte à représenter à partir de la mémoire des pages de texte (4), indépendamment du programme télévisé en marche, et
- un dispositif de commande du curseur (UC, 7) qui est relié au lecteur des données d'émissions, au générateur d'images (5) et au dispositif de décalage des pages (UC, 3, 7), destiné à déplacer un curseur dans la zone de l'image à représenter, laquelle contient le texte et le contour d'image, destiné à réceptionner les données de texte dans la mémoire des émissions (4) et à commuter le dispositif de décalage des pages (UC, 7) sur d'autres pages de texte à représenter en actionnant une touche définie d'un dispositif d'entrée des commandes (7).

2. Dispositif de réception vidéo selon la revendication 1, caractérisé par un dispositif de décalage des pages (UC, 3, 7) destiné
- à décaler vers une page de numéro supérieur, lorsque le curseur est déplacé dans un premier des quatre contours d'image, et que la touche définie est alors actionnée,
- à décaler vers une page de numéro inférieur, lorsque le curseur est déplacé dans un deuxième des quatre contours d'image, et que la touche définie est alors actionnée, le deuxième contour étant parallèle au premier contour d'image,
- à décaler vers un programme de numéro supérieur, et là, vers un numéro de page sauvegardé dans la mémoire de repère des pages, lorsque le curseur est déplacé sur un troisième contour d'image, et que la touche définie est alors actionnée, le troisième contour d'image étant perpendiculaire au premier contour d'image, et
- à décaler vers un programme de numéro inférieur, et là, vers un numéro de page défini, lorsque le curseur est déplacé sur un quatrième contour d'image, et que la touche définie est alors actionnée, le quatrième contour d'image étant parallèle au troisième contour d'image.

3. Dispositif de réception vidéo selon la revendication 1, caractérisé en ce que le dispositif de décalage des pages contient des moyens qui, lors du décalage des pages de texte d'un programme vers des pages de texte d'un autre programme, depuis les données de texte sauvegardées dans la mémoire des pages de texte (4) vers des pages de texte, qui contiennent les indications relatives aux émissions, sont destinés à contrôler le contenu pour s'assurer de la présence d'informations sur les horaires, comme par exemple les heures de début des émissions, qui correspondent à l'heure sur laquelle était placé le curseur dans la page représentée en dernier lieu, de telle sorte que soit sélectionnée comme première page de texte d'un programme sélectionné par décalage, celle qui contient l'information dans la plage horaire correspondante.

4. Dispositif de réception vidéo selon la revendication 3, caractérisé en ce que le dispositif de décalage des pages est conçu de telle sorte que, lors du décalage des pages de texte d'un programme vers des pages de texte d'un autre programme, soit sélectionnée la page de texte qui contient une information dans la plage horaire dans laquelle se situe l'heure actuellement diffusée.
